(19) Europäisches Patentamt
European Patent Office
Office européen des brevets

(11) **EP 1 523 419 B1**

(12) **FASCICULE DE BREVET EUROPEEN**

(45) Date de publication et mention
de la délivrance du brevet:
**03.11.2010 Bulletin 2010/44**

(21) Numéro de dépôt: **03735592.2**

(22) Date de dépôt: **10.06.2003**

(51) Int Cl.:
***B60C 15/06*** *(2006.01)*

(86) Numéro de dépôt international:
**PCT/EP2003/006053**

(87) Numéro de publication internationale:
**WO 2003/103990 (18.12.2003 Gazette 2003/51)**

(54) **ARMATURE DE BOURRELET DE PNEUMATIQUE COMPRENANT DES RENFORTS DISCONTINUS**

REIFENWULSTVERSTÄRKUNG MIT DISKONTINUIRLICHEN FESTIGKEITSTRÄGERN

TYRE BEAD REINFORCEMENT COMPRISING DISCONTINUOUS REINFORCING ELEMENTS

(84) Etats contractants désignés:
**AT BE BG CH CY CZ DE DK EE ES FI FR GB GR HU IE IT LI LU MC NL PT RO SE SI SK TR**

(30) Priorité: **10.06.2002 FR 0207077**

(43) Date de publication de la demande:
**20.04.2005 Bulletin 2005/16**

(73) Titulaires:
• **Société de Technologie Michelin**
  **63000 Clermont-Ferrand (FR)**
• **Michelin Recherche et Technique S.A.**
  **1763 Granges-Paccot (CH)**

(72) Inventeurs:
• **DURIF, Pierre**
  **F-63530 Enval (FR)**
• **SALLAZ, Gilles**
  **F-63122 Ceyrat (FR)**
• **GERVAIS, Philippe**
  **F-63200 Riom (FR)**

(74) Mandataire: **Diernaz, Christian**
  **M. F. P. Michelin,**
  **SGD/LG/PI-F35-Ladoux**
  **63040 Clermont-Ferrand Cedex 09 (FR)**

(56) Documents cités:
**WO-A-99/34990    WO-A-99/34991**
**US-A- 5 529 104**

• **PATENT ABSTRACTS OF JAPAN vol. 2000, no. 25, 12 avril 2001 (2001-04-12) & JP 2001 233025 A (BRIDGESTONE CORP), 28 août 2001 (2001-08-28)**

## Description

L'invention concerne un pneumatique à armature de carcasse radiale destiné à l'équipement de véhicules portant de lourdes charges et plus particulièrement des engins de génie civil ou de véhicules poids lourd.

Un pneumatique à armature de carcasse radiale comprend une zone de sommet surmontée radialement à l'extérieur par une bande de roulement destinée à venir en contact avec le sol pendant le roulage dudit pneumatique, de deux zones de flanc prolongeant le sommet axialement et radialement de part et d'autre et terminés par des zones formant des bourrelets. Ce pneumatique est ensuite monté sur une jante de montage comportant des sièges de jante de forme tronconique ou cylindrique pouvant être ou non prolongés par des rebords selon le type de pneumatique, ces sièges ou rebords quand ils sont présents étant prolongés par des crochets de forme sensiblement circulaire.

Les bourrelets dudit pneumatique viennent en appui contre les sièges et les crochets de cette jante de montage. L'armature de carcasse de ce pneumatique est composée d'une pluralité de renforts (de type câble ou fils en général métalliques) noyés dans au moins un mélange de caoutchouc, ces renforts étant sensiblement orientés dans la direction méridienne (c'est-à-dire dans une direction faisant un angle voisin de 90° avec la direction circonférentielle sur le pneumatique). Afin d'ancrer ces renforts dans les bourrelets du pneumatique, il est prévu au moins une armature de bourrelet formant un renforcement circonférentiel : les renforts de carcasse pouvant être retournés autour de cette armature de bourrelet pour former un retournement ou plaqués axialement contre ladite armature.

Sous l'effet combiné de la charge portée par le pneumatique et du roulage, les parties des flancs du pneumatique situées au voisinage de l'empreinte dudit pneumatique avec le sol subissent des variations cycliques de courbure. Dans cette région, les flancs subissent des flexions autour des crochets de jante dans un plan méridien (c'est-à-dire un plan contenant l'axe de rotation du pneumatique). En outre, l'écrasement du pneumatique engendre des mouvements alternatifs et cycliques des renforts de l'armature de carcasse dans les flancs dans la direction circonférentielle qui entraînent un déplacement relatif plus ou moins important des bourrelets par rapport aux crochets de jante. Ces mouvements sont encore amplifiés quand la charge supportée augmente. Il en est de même quand la taille du pneumatique augmente et également quand le rapport de forme dudit pneumatique est réduit (H/S <1, où H est la hauteur de la section du pneumatique et S la largeur de ladite section).

Sous l'effet de ces mouvements alternatifs dans les directions circonférentielle et méridienne, les bourrelets frottent contre les crochets de la jante de montage et s'usent plus ou moins. Pour réduire cette usure, il est connu, outre l'emploi de mélange de gomme moins sensible à l'usure par frottement, de disposer dans chaque bourrelet et plus ou moins haut (c'est-à-dire radialement vers l'extérieur) dans les flancs au moins une armature complémentaire de renforcement composée d'une pluralité de renfort (câbles ou fils métalliques) disposés les uns à côté des autres et de manière à être orientés selon un angle nul ou faible par rapport à la direction circonférentielle (par angle nul ou faible, on entend un angle allant de 0° à 15° en valeur).

Ces renforts peuvent être continus, c'est-à-dire faisant au moins un tour complet, ou discontinus, c'est-à-dire s'étendant sur une fraction angulaire d'un tour complet et inférieure à 360°. Cette armature complémentaire de renforcement peut être placée axialement à l'intérieur ou à l'extérieur de l'armature de carcasse ou axialement contre le retournement lorsque l'armature de carcasse est ancrée par retournement autour d'une tringle par exemple.

Le document US-A5529104 divulgue un pneumatique selon le préambule de la revendication 1.

Lorsqu'on emploie des renforts s'étendant sur une fraction angulaire inférieure à 360° (ces renforts seront dits "renfort discontinus" dans le présent document), des problèmes d'endurance liés à certaines répartitions des extrémités de renforts discontinus peuvent survenir compte tenu des cycles de sollicitations répétées pendant le roulage comme décrit précédemment.

L'objet de l'invention est un pneumatique pour véhicules portant de lourdes charges comprenant une zone de sommet prolongée axialement et radialement par des flancs, ces derniers étant eux-mêmes prolongés par des bourrelets destinés à venir en contact avec une jante de montage du pneumatique, cette jante comportant une partie formant siège de jante prolongée radialement vers l'extérieur par un crochet de jante de profil extérieur sensiblement circulaire, les flancs du pneumatique étant renforcés par une armature de carcasse radiale, cette armature de carcasse radiale se prolongeant dans les bourrelets du pneumatique pour être ancrée sur une armature de renforcement circonférentiel de bourrelet. Ce pneumatique comprend en outre, dans au moins un bourrelet, une armature complémentaire de renforcement comportant une pluralité de renforts discontinus de courte longueur L0, ces renforts discontinus étant disposés sensiblement circonférentiellement selon une pluralité de cercles C concentriques, chaque cercle C étant défini par un rayon moyen R mesuré par rapport à l'axe de rotation du pneumatique. Chaque renfort discontinu de longueur L0 situé sur un cercle C de rayon R est couplé mécaniquement sur des longueurs de couplage L11 et L12 respectivement avec deux renforts discontinus situés sur un cercle C1 de rayon R1 inférieur au rayon R, ledit cercle étant immédiatement adjacent au cercle C, ce pneumatique étant **caractérisé en ce que** les longueurs de couplage L11 et L12, L11 étant prise supérieure à L12, vérifient la relation suivante :

$$1.5 \le K \le 4$$

avec :

$$K = \frac{\left(1 - \dfrac{L12}{L0}\right)}{\left(1 - \dfrac{L11}{L0}\right)}$$

En respectant cette relation pour tous les renforts discontinus de tous les cercles on obtient une répartition optimale des extrémités desdits renforts discontinus permettant d'éviter les problèmes mentionnés dans l'art antérieur.

Cette répartition optimale peut être réalisée en plaçant l'armature complémentaire sur l'ébauche du pneumatique conformé en forme de tore ou bien sur un tambour de confection avant la conformation de ladite armature.

Cette relation s'applique que la longueur L0 soit ou non identique pour tous les câbles.

Encore plus préférentiellement, K est tel que : $2 \le K \le 2.5$.

Bien entendu, lorsqu'il est énoncé que les renforts continus sont disposés sur des cercles concentriques, il faut entendre que ces renforts peuvent être placés sur des spires et que chaque renfort est disposé sur une courbe assimilable à un arc de cercle.

Dans une variante de l'invention où les câbles sont tous d'une même longueur L0, le pneumatique est **caractérisé en ce que** :

- chaque renfort discontinu de longueur L0 situé sur un cercle C de rayon R est couplé mécaniquement sur des longueurs de couplage L11 et L12 respectivement avec deux renforts discontinus situés sur un cercle C1 de rayon R1 inférieur au rayon R, ledit cercle étant immédiatement adjacent au cercle C, la longueur de couplage L11 étant comprise entre 55 à 75% de L0 et la longueur de couplage L12 étant comprise entre 10 à 30% de L0 ;
- chaque renfort discontinu du même cercle C de rayon R est couplé mécaniquement sur des longueurs de couplage L21 et L22 respectivement avec deux renforts discontinus situés sur un cercle C2 de rayon R2 immédiatement adjacent au cercle C1, le rayon R2 étant inférieur au rayon R1, la longueur de couplage L21 étant comprise entre 20 à 40% de L0 et la longueur de couplage L22 étant comprise entre 45 à 65% de L0.

Il est entendu que ces relations de couplage mécanique s'appliquent entre les renforts discontinus de tous les cercles à l'exception des deux cercles consécutifs les plus proches radialement de l'axe de rotation.

Préférentiellement, les renforts discontinus ont une longueur moyenne comprise entre 1/3 et 1/12 de la longueur circonférentielle de l'armature circonférentielle de bourrelet prise aux points de ladite armature radialement les plus à l'intérieur.

Si on note D0 et M0 respectivement la distance moyenne séparant les extrémités de deux renforts sur le cercle C et le milieu de l'arc entre ces extrémités et D1 et M1 respectivement la distance moyenne séparant les extrémités de deux renforts sur un cercle C1 adjacent au cercle C et le milieu de l'arc entre ces extrémités, on a constaté qu'il était avantageux que les milieux M0 et M1 soient distants d'au moins une longueur d'arc supérieure à la moitié de la longueur d'arc séparant les extrémités les plus éloignées sur un même cercle. De cette manière, on obtient une répartition circonférentielle des arcs de cercle sans renforts qui est optimale d'un point de vue de la performance en fatigue de l'armature complémentaire tout en réalisant une structure dont les rigidités sont homogènes circonférentiellement. Pour mesurer la longueur d'arc entre les points milieu M0 et M1, on projette radialement le point radialement le plus à l'intérieur sur le cercle auquel appartient le point radialement le plus à l'extérieur. Préférentiellement, la longueur entre les milieux M0 et M1 est supérieure à 30% de L0.

Préférentiellement, la limite radialement externe de l'armature complémentaire de renforcement est comprise dans un secteur angulaire ouvert axialement vers l'intérieur et radialement vers l'extérieur faisant un angle $\alpha$ au plus égal à 90° avec une direction parallèle à la direction axiale, lorsque le pneumatique de l'invention est monté sur sa jante, ce secteur angulaire étant mesuré à partir d'une droite passant par le centre du profil moyen du crochet de jante et parallèle à l'axe de rotation.

Dans le cas d'un montage sur une jante comportant des sièges prolongés par des rebords eux-mêmes terminés par des crochets, il est préférable que l'angle $\alpha$ soit au plus égal à 80°.

Cette limite permet de limiter raisonnablement les cycles d'efforts dans les renforts de ladite armature ainsi que les déformations maximales supportées par les renforts lors de chocs avec des objets.

Comme éléments de renfort de l'armature complémentaire de renforcement, on peut employer des câbles métalliques dits "mono-module", c'est-à-dire ayant une courbe force allongement à une seule pente moyenne (correspondant par définition au module d'élasticité du câble) ou des câbles dits "bi-modules", c'est-à-dire dont la courbe force allongement présente au moins deux pentes différentes de part et d'autre d'un point de transition (la courbe force allongement présente deux pentes distinctes, la pente à l'origine et aux petits allongements étant inférieure à la pente aux grands allongements).

Dans des applications de l'invention à des pneumatiques se montant sur des jantes dont les sièges sont prolongés directement par des crochets et lorsqu'on emploie comme renforts de l'armature complémentaire de renforcement des câbles discontinus mono-module, il est préférable que la limite radialement externe de ladite armature soit comprise dans un secteur angulaire ouvert axialement vers l'intérieur et radialement vers l'extérieur faisant un angle $\alpha$ au plus égal à 75° avec une direction parallèle à la direction axiale, lorsque le pneumatique de l'invention est monté sur sa jante, ce secteur angulaire étant mesuré à partir d'une droite passant par le centre du profil moyen du crochet de jante et parallèle à l'axe de rotation. Pour ces mêmes types de pneumatiques, la limite radialement externe de ladite armature est comprise dans un secteur angulaire ouvert axialement vers l'intérieur et radialement vers l'extérieur faisant un angle $\alpha$ au plus égal à 90° avec une direction parallèle à la direction axiale, à la condition avantageuse d'utiliser des câbles discontinus élastiques (bi module).

Dans des applications de l'invention à de très gros pneumatiques (notamment pour engins de génie civil) se montant sur des jantes ayant des rebords prolongés par des crochets, et lorsqu'on emploie comme renforts de l'armature complémentaire de renforcement des câbles discontinus mono-module, il est préférable que la limite radialement externe de ladite armature soit comprise dans un secteur angulaire ouvert axialement vers l'intérieur et radialement vers l'extérieur faisant un angle $\alpha$ au plus égal à 45° avec une direction parallèle à la direction axiale, lorsque le pneumatique de l'invention est monté sur sa jante, ce secteur angulaire étant mesuré à partir d'une droite passant par le centre du profil moyen du crochet de jante et parallèle à l'axe de rotation. Pour ces mêmes types de pneumatiques destinés notamment à des engins de génie civil, la limite radialement externe de ladite armature est comprise dans un secteur angulaire ouvert axialement vers l'intérieur et radialement vers l'extérieur faisant un angle $\alpha$ au plus égal à 75° avec une direction parallèle à la direction axiale, à la condition avantageuse d'utiliser des câbles discontinus élastiques (bi module).

Par ailleurs, il est avantageux d'employer au sein d'une même nappe de l'armature complémentaire de renforcement ou dans deux nappes distinctes superposées pour former une même armature complémentaire, des câbles discontinus de nature différente (à savoir mono-module et bi-module). Dans un tel cas, il est avantageux que les câbles discontinus mono-module et bimodules soient limités dans des secteurs angulaires respectifs correspondant à ce qui a été énoncé précédemment. Préférentiellement, la limite interne est située dans un secteur faisant au plus un angle de 45° avec la même direction, chacun desdits secteurs ayant son sommet au centre du profil externe du crochet de jante.

L'armature complémentaire de renforcement de bourrelet selon l'invention peut comprendre plusieurs nappes de renforts discontinus, lesdites nappes étant placées :

- soit d'un même côté de l'armature de carcasse (axialement à l'intérieur ou à l'extérieur) ;

- soit d'un même côté du retournement de l'armature de carcasse (axialement à l'intérieur ou à l'extérieur) ;

- soit de part et d'autre de l'armature de carcasse ou du retournement de l'armature de carcasse (axialement à l'intérieur et à l'extérieur) ;

- soit à axialement à l'extérieur de l'armature de carcasse et axialement à l'intérieur du retournement de l'armature de carcasse ;

- soit à axialement à l'intérieur de l'armature de carcasse et axialement à l'extérieur du retournement de l'armature de carcasse.

D'autres caractéristiques et avantages de l'invention ressortent de la description faite ci-après en référence aux dessins annexés qui montrent, à titre d'exemple non limitatif, plusieurs formes de réalisation de l'objet de l'invention :

- La figure 1 montre une coupe méridienne d'un bourrelet d'un pneumatique selon l'invention avec une armature complémentaire de renforcement formée de deux nappes disposées de part et d'autre de l'armature de carcasse ;

- La figure 2 montre la disposition des renforts d'une nappe de l'armature de renforcement employée dans le bourrelet montré avec la figure 1 ;

- La figure 3 montre une variante de placement des nappes de l'armature de renforcement de bourrelet ;

- La figure 4 montre une troisième variante de bourrelet selon l'invention ;

- La figure 5 montre une quatrième variante de bourrelet selon l'invention

- La figure 6 montre une variante de bourrelet de pneumatique poids lourd se montant sur une jante ayant des sièges prolongés par un rebord,

- La figure 7 montre une variante de bourrelet de pneumatique poids lourd se montant sur une jante ayant des sièges inclinés d'un angle de 15° avec la direction axiale.

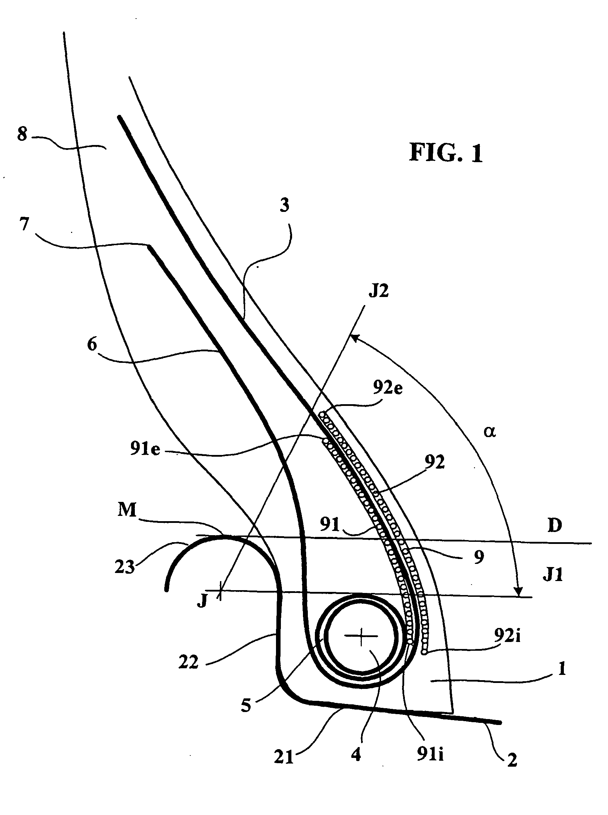

Un pneumatique de dimension 45/65 R 45 a été réalisé et est représenté monté sur une jante 2 selon une vue partielle en coupe à la figure 1. Sur cette figure 1, la jante de montage 2 comprend une partie formant siège 21 prolongée axialement et radialement vers l'extérieur par un rebord 22 perpendiculaire à l'axe de rotation, ce rebord 22 se terminant par une partie formant crochet 23 dont le profil est sensiblement circulaire de centre J. Également sur cette figure 1, on distingue un flanc 8 prolongé par un bourrelet 1 du pneumatique selon l'invention monté sur une jante de montage 2 et gonflé à sa pression d'utilisation. Le pneumatique comporte une armature de carcasse 3 renforcée par des câbles métalliques formés de 68 fils de 0.26 mm frettés, cette armature de carcasse 3 étant retournée dans chaque bourrelet autour d'une armature de renforcement circonférentielle 4 de bourrelet ; dans le cas présent, l'armature de renforcement circonférentielle de bourrelet 4 est une tringle métallique 4 pourvue sur son pourtour d'une épaisseur de mélange de gomme 5 destiné à éviter le contact direct des renforts de l'armature de carcasse 3 avec ladite tringle 4. L'armature de carcasse 3 est retournée autour de la tringle 4 pour former un retournement 6 dont l'extrémité 7 est prévue pour être située dans le flanc, c'est-à-dire radialement au delà du point M du crochet 23 de la jante 2 radialement le plus à l'extérieur.

Par ailleurs, ce bourrelet 1 inclut une armature complémentaire de renforcement 9 comportant deux nappes 91 et 92 formées chacune d'une pluralité de câbles métalliques discontinus et orientés sensiblement dans la direction circonférentielle et enrobés de mélange de gomme. Chacune de ces nappes 91, 92 est placée contre l'armature de carcasse 3, c'est-à-dire contre la partie non retournée autour de la tringle 4, l'une de ces nappes étant placée axialement à l'intérieur de l'armature de carcasse et l'autre axialement à l'extérieur de cette même armature. Ces deux nappes 91, 92 ont, vue en coupe méridienne sur la figure 1, chacune une extrémité basse 91i et 92i respectivement et une extrémité haute 91e et 92e respectivement : les extrémités basses 91i et 92i étant préférentiellement situées radialement au dessous d'une droite D parallèle à l'axe de rotation passant par le point M du crochet de jante 23 radialement le plus à l'extérieur et les extrémités hautes 91e et 92e étant préférentiellement étagées pour éviter toute singularité de déformation et de contrainte.

Chacune des nappes 91, 92 de l'armature complémentaire de renforcement 9 est composée d'une pluralité de tronçons de câbles métalliques en câbles bi-modules de 24 fils de 0.26 mm de diamètre ayant un premier module d'élasticité aux faibles allongement de 25 GPa et un second module d'élasticité aux plus grands allongements de 78 Gpa (le point de transition sur la courbe force allongement se situant à environ 0.5% de déformation). Ces câbles discontinus sont tous sensiblement de même longueur L0 égale dans le cas présent à 676 mm, soit 67.9% de la longueur circonférentielle de la tringle 4 (prise aux points de la tringle les plus à l'intérieur radialement). Le mélange de caoutchouc des nappes 91, 92 est un mélange de caoutchouc de module préférentiellement au plus égal à 1.2 daN/mm².

Préférentiellement et comme montré à la figure 1, la nappe 92 de l'armature complémentaire de renforcement 9 axialement la plus à l'intérieur du pneumatique est celle qui s'étend le plus haut dans le flanc 8. Les extrémités hautes 91e et 92e des nappes de l'armature complémentaire de renforcement 9 de bourrelet sont avantageusement situées dans un secteur angulaire d'angle α, ce secteur angulaire étant compris entre une droite J1 passant par le point J et parallèle à la direction axiale du pneumatique et une droite J2 passant par le même point J, l'angle α, dudit secteur étant tel qu'il est ouvert axialement vers l'intérieur et radialement vers l'extérieur d'au plus 90°(dans le cas présent 65°).

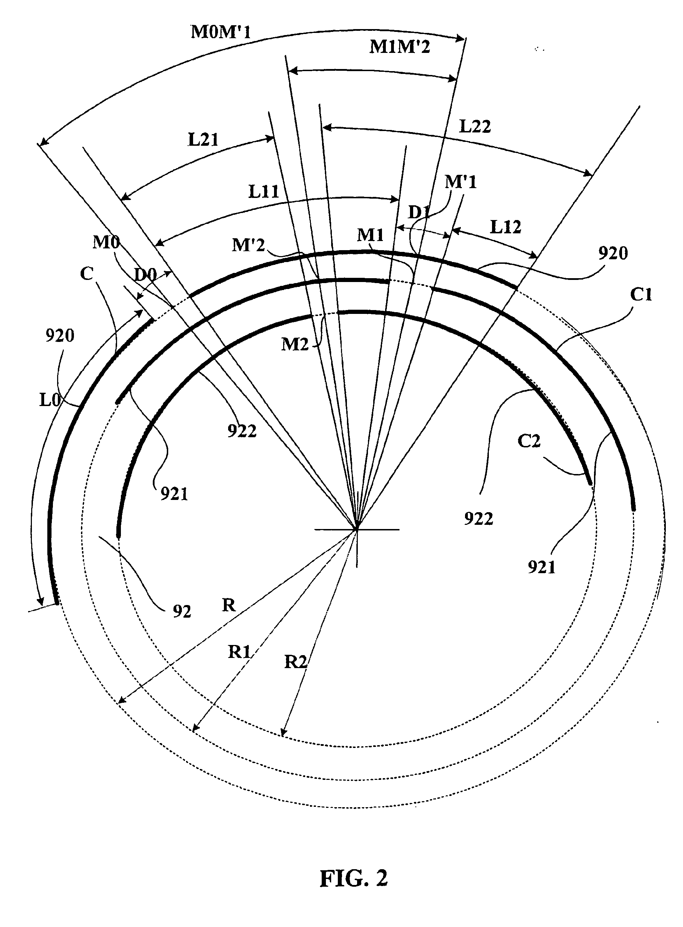

La figure 2 montre l'arrangement des renforts d'une même nappe de l'armature complémentaire de renforcement 9 de la structure montrée à la figure 1 sur trois cercles voisins C, C1 et C2, chaque cercle étant centré sur l'axe de rotation de l'ensemble monté (pneumatique et jante). Tous les renforts ont sensiblement une même longueur égale dans le cas présent à 676 mm.

Les renforts discontinus peuvent également être des renforts textiles..

Le pas entre cercles voisins C, C1 et C2, sur lesquels sont disposés les renforts discontinus, est égal au diamètre des renforts augmenté d'au moins 0.5 mm.

Sur la figure 2, on a représenté partiellement la nappe 92, l'axe de rotation du pneumatique étant perpendiculaire au plan de la figure. On voit qu'un renfort 920 de longueur L0 sur le cercle C de rayon R est couplé selon des longueurs d'arc L11 et L12 avec deux renforts 921 du cercle C1 de rayon R1 (R1 inférieur à R) adjacent au cercle C et ce même renfort 920 de longueur L0sur le cercle C de rayon R est couplé selon des longueurs d'arc L21 et L22 avec deux renforts 922 du cercle C2 de rayon R2 adjacent au cercle C1. Dans le cas présenté les longueurs de couplage sont:

     L11 = 446 mm (soit 66% de L0)

     L12 = 108 mm (soit 16% de L0)

     L21 = 190 mm (soit 28% de L0)

     L22 = 351 mm (soit 52% de L0)

Ces longueurs de couplage vérifient la relation :

$$1.5 \leq K \leq 4$$

En effet, la valeur prise par K est de 2.47 lorsqu'on considère les valeurs de couplage entre un renfort 920 de longueur L0 sur le cercle C et les renforts 921 du cercle C1 de rayon R1 (R1 inférieur à R) adjacent au cercle C du cercle adjacent.

Par ailleurs, les longueurs moyennes d'arc délimités par les extrémités en vis-à-vis de deux renforts consécutifs d'un même cercle C, C1 et C2 sont respectivement de l'ordre de 104, 95 et 86 mm. Les milieux des arcs séparant les extrémités en vis-à-vis de deux renforts 920, 921, 922 consécutifs d'un même cercle C, C1 et C2 sont respectivement notés M0, M1, M2. Pour le pneumatique selon l'invention, la longueur d'arc M0M'1 est supérieure à la longueur d'arc D0 entre les extrémités en vis-à-vis de deux renforts consécutifs du même cercle C (le point M'1 correspond au point d'intersection avec le cercle C du rayon passant par M1 et prolongé jusqu'au cercle C). De même la longueur d'arc M1M'2 est supérieure à la longueur d'arc D1 séparant les extrémités en vis-à-vis de deux renforts consécutifs du cercle C1 (le point M'2 correspond au point d'intersection avec le cercle C1 du rayon passant par M2 et prolongé jusqu'au cercle C1).

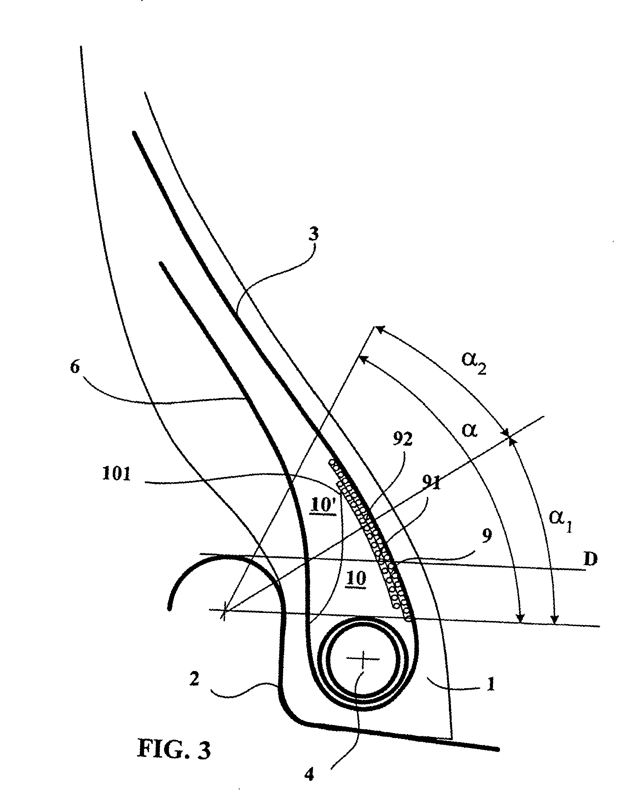

Sur les figures 3, 4 et 5 sont montrées trois variantes de structure de bourrelet incorporant une armature complémentaire de renforcement 9, ladite armature comprenant deux nappes de renforts discontinus ; par commodité, les références employées pour ces figures sont identiques à celles des figures 1 et 2 pour autant qu'elles désignent des composants identiques. Pour ces trois variantes montées sur une jante 2, les bourrelets 1 comprennent une tringle 4 autour de laquelle est retournée une armature de carcasse 3 en allant axialement de l'intérieur vers l'extérieur ; radialement à l'extérieur de la tringle 4 est disposé un profilé 10 en mélange de caoutchouc de section sensiblement triangulaire dont la pointe 101 la plus éloignée de la tringle 4 est située axialement plus près de l'armature de carcasse 3 que de son retournement 6. Un autre mélange de remplissage 10' est par ailleurs prévu entre ce profilé 10 et ledit retournement 6.

Sur la figure 3, les deux nappes 91 et 92 de l'armature complémentaire 9 sont placées l'une contre l'autre et axialement à l'extérieur de l'armature de carcasse 3 entre le profilé de mélange et ladite armature de carcasse. Dans cette variante, chaque nappe 91, 92 est composée de deux renforts différents, à savoir des câbles discontinus mono module métalliques et des câbles discontinus bi module tels qu'employés dans la variante de la figure 1. Afin d'éviter tout problème de tenue en fatigue de ces câbles, les câbles mono module ne sont présents que dans un premier secteur d'angle $\alpha 1$ égal à 45° avec la direction axiale et les câbles bi modules complètent ladite nappe dans un secteur d'angle $\alpha 2$ au plus égal à 30° et prolongeant ledit premier secteur.

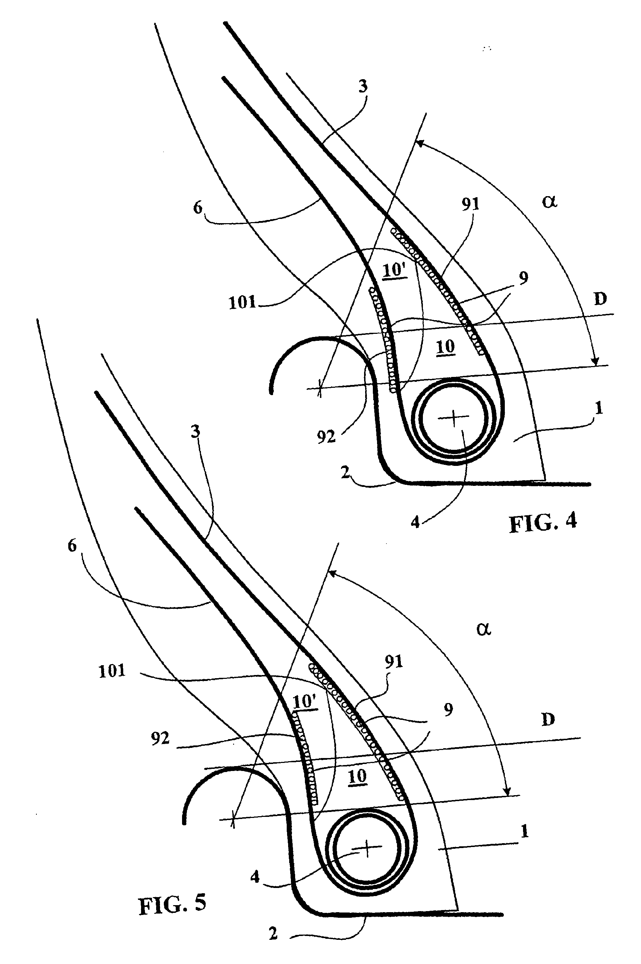

Sur la figure 4, une première nappe 91 de l'armature complémentaire 9 est placée axialement à l'extérieur de l'armature de carcasse 3 contre cette dernière et une seconde nappe 92 de l'armature complémentaire 9 est placée axialement à l'extérieur du retournement 6 contre celui-ci.

Sur la variante montrée avec la figure 5, une première nappe 91 de l'armature complémentaire 9 est placée axialement à l'extérieur de l'armature de carcasse 3 contre cette dernière et une seconde nappe 92 de l'armature complémentaire 9 est placée axialement à l'intérieur du retournement 6 contre celui-ci.

Dans ces trois variantes, les nappes 91 et 92 de l'armature complémentaire de renforcement 9 ont leurs extrémités radialement les plus à l'extérieur situées dans un secteur angulaire d'angle $\alpha$ au plus égal à 75° et leurs extrémités radialement les plus à l'intérieur situées radialement au dessous d'une droite D parallèle à l'axe de rotation et passant par le point de la jante radialement les plus à l'extérieur. La définition du secteur angulaire d'angle $\alpha$ correspond à ce qui a été donné pour la variante de la figure 1.

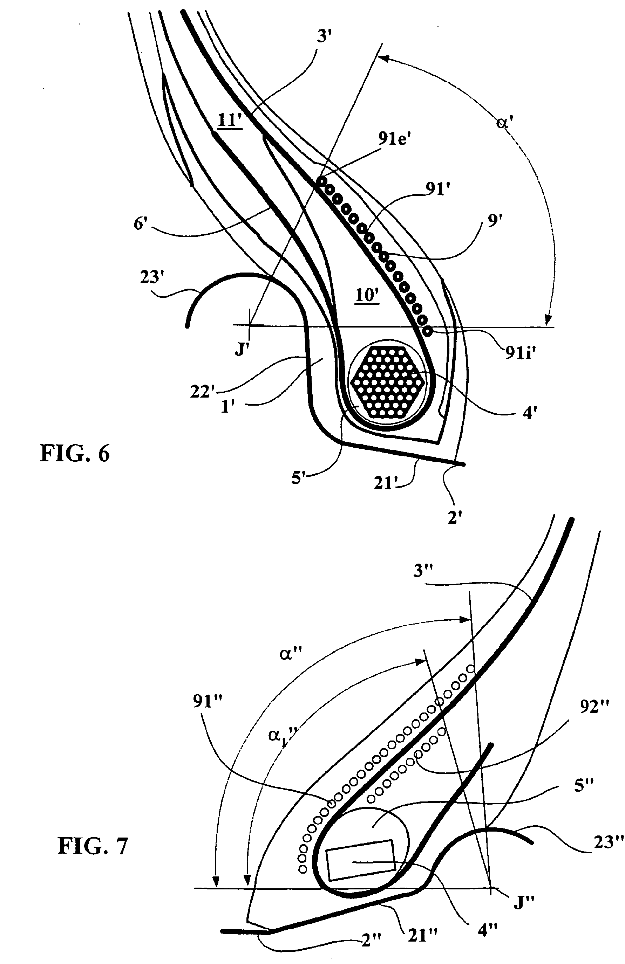

La coupe représentée à la figure 6 montre une variante de bourrelet selon l'invention pour un pneumatique de dimension 10.00 R 20 destiné à équiper un véhicule poids lourd. Par souci de simplification, les références numériques employées pour cette figure 6 correspondent à celles employées pour les autres figures, à la différence près, qu'elles sont suivies du symbole -'- (par exemple le bourrelet repéré 1 pour les variantes des figures 1 à 5 est repéré dans la variante de la figure 6 par 1').

Le pneumatique montré à la figure 6 se monte sur une jante 2' dont les sièges 21' sont prolongés par des rebords 22' eux mêmes terminés par des crochets 23' à l'image de la jante employée pour le pneumatique décrit avec les figures précédentes.

Dans cet exemple, il est disposé axialement à l'intérieur de la carcasse 3' une armature de renforcement complémentaire 9' formée d'une seule nappe 91' s'étendant entre une extrémité intérieure 91i' et une extrémité extérieure 91e'. L'extrémité intérieure 91 i' est située sensiblement au niveau de la partie radialement la plus à l'extérieur de la tringle 4' du bourrelet 1', tandis que l'extrémité extérieure 91e' est située à la limite radialement externe d'un secteur angulaire d'angle $\alpha'$ égal à 64°. Ce secteur angulaire a pour sommet le point J', centre géométrique du cercle formant le crochet 23' de la jante 2', et pour côtés, d'une part, une droite passant par ce point J' et parallèle à l'axe de rotation du pneumatique et d'autre part, une droite passant par ce point J'et par l'extrémité extérieure 91e'.

La nappe de renforcement 91' est formée d'une pluralité de câbles métalliques de longueur égale à 251.2 mm disposés sur des cercles concentriques à l'axe de rotation du pneumatique.

Les câbles employés pour cette nappe sont des câbles mono module de formule 11-35 (c'est-à-dire 11 fils élémentaires de 0.35 mm de diamètre).

Par ailleurs et selon l'invention, les longueurs de couplage entre les câbles satisfont les valeurs préconisées. En particulier, pour les câbles situés sur des cercles de plus grand diamètre sur le pneumatique, on a les longueurs de couplage suivantes (en gardant les notations employées pour les figures précédentes et en particulier la figure 2) :

L11 = 157.4 mm (soit 62.7% de L0)

L12 = 33.2 mm (soit 13.2% de L0)

L21 = 64.6 mm (soit 25.7% de L0)

L22 = 126.3 mm (soit 50.3% de L0)

Dans le cas présent, les couplages entre par exemple un renfort discontinu sur un cercle et les deux renforts sur le cercle adjacent, correspondant aux longueurs de couplage L11 et L12, vérifient la relation :

$$1.5 \le K \le 4$$

puisque dans cet exemple K est égal à 2.32 .

Afin de limiter les mouvements de rotation cycliques autour de la tringle 4' de bourrelet sous l'effet des variations cycliques de tension dans la carcasse, on emploie, de manière avantageuse, une tringle 4' dont la construction conduit à une rigidité de torsion élevée (c'est-à-dire supérieure à la rigidité d'une tringle dite tressée équivalente pour la même dimension de pneumatique). En outre, le couplage entre la nappe de carcasse 3' et son retournement 6' est réalisé grâce à l'utilisation de deux mélanges de caoutchouc de remplissage 10' et 11', le mélange 10' de dureté supérieure à celle du mélange 11' étant disposé contre l'enrobage 5' de la tringle 4' et axialement le long de la carcasse 3' et de la nappe complémentaire 91'.

La figure 7 montre une autre variante selon l'invention relative à un pneumatique de dimension 385/65 R 22.5 pour poids lourd et destiné à être monté sur une jante 2" dont chaque siège 21" " est incliné d'un angle d'environ 15° avec la direction axiale et est directement prolongé par un crochet 23" de forme sensiblement circulaire.

Chaque bourrelet 1" comprend une armature de carcasse 3" enroulée autour d'un renfort circonférentiel formé d'une tringle 4" et d'un enrobage en gomme 5" pour former un retournement.

En outre, ce bourrelet 1" comprend une armature complémentaire 9" comportant une première série de câbles discontinus 91" et une seconde série de câbles discontinus 92".

La première série de câbles discontinus 91" est placée axialement à l'extérieur de l'armature de carcasse 3" et est formée de câbles métalliques bi module (21 fils de 0.28 mm) répartis sur une pluralité de cercles concentriques à l'axe de rotation. La partie radialement la plus éloignée de l'axe de rotation de cette première série de câbles discontinus 91" est située dans un secteur angulaire d'angle $\alpha$" égal à 85°.

Les câbles les plus éloignés de l'axe de rotation de la première série de câbles discontinus 91" de longueur moyenne égale à 274.2 mm satisfont les relations de couplage suivantes :

L11 = 178.3mm (65.0%)
L12= 51.1mm (18.6%)

L21 = 83.1mm (30.3%)
L22 = 146.4mm (53.4%)

La seconde série de câbles discontinus 92" est placée axialement à l'intérieur de l'armature de carcasse 3" et est formée de câbles métalliques mono module (11 fils de 0.35 mm) répartis sur une pluralité de cercles concentriques à l'axe de rotation. La partie radialement la plus éloignée de l'axe de rotation de cette seconde série de câbles discontinus 92" est située dans un secteur angulaire d'angle $\alpha_1$" égal à 74°.

Les câbles les plus éloignés de l'axe de rotation de la seconde série de câbles discontinus 92" de longueur moyenne égale à 270.4 mm satisfont les relations de couplage suivantes :

L11 = 170.5mm (63.1%)
L12 = 38.3mm (14.2%)
L21 = 71.7mm (26.5%)
L22 = 137.5mm (50.8%)

Pour les deux séries de câbles, la valeur de K est égale à 2.3.

Dans la variante présentée, l'extrémité inférieure de la première série de câbles discontinus 91" (correspondant au cercle de pose de plus petit rayon) est située sensiblement au voisinage de la tringle 4", tandis que l'extrémité inférieure de la seconde série de câbles discontinus 92" est située radialement au dessus de l'enrobage 5" de la tringle 4".

L'exemple présenté avec la figure 7 n'est qu'une variante parmi d'autres que la personne du métier est à même de choisir ; en particulier, la position relative de chacune des séries de câbles discontinus peut être inversée (les câbles discontinus mono module étant placés axialement à l'intérieur de l'armature de carcasse).

**Revendications**

1. Pneumatique pour véhicules portant de lourdes charges comprenant une zone de sommet prolongée axialement et radialement par des flancs (8), ces derniers étant eux-mêmes prolongés par des bourrelets (1) destinés à venir en contact avec une jante de montage (2) du pneumatique, cette jante comportant une partie formant siège de jante (21) comportant radialement à l'extérieur un crochet (23) de jante de profil sensiblement circulaire, les flancs (8) du pneumatique étant renforcés par une armature de carcasse radiale (3), cette armature de carcasse radiale (3) se prolongeant dans les bourrelets (1) du pneumatique pour être ancrée sur une armature de renforcement circonférentiel (4) de bourrelet, ce pneumatique comprenant en outre, dans au moins un bourrelet une armature supplémentaire de renforcement (9) composée d'une pluralité de renforts (920, 921, 922) discontinus de longueur L0, ces renforts discontinus étant orientés sensiblement circonférentiellement selon une pluralité de cercles C, C1, C2 concentriques à l'axe de rotation du pneumatique monté sur sa jante, chaque cercle étant défini par un rayon moyen (R, R1, R2) mesuré par rapport audit axe de rotation, chaque renfort discontinu de longueur L0 situé sur un cercle C de rayon R est couplé mécaniquement sur des longueurs de couplage L11 et L12 respectivement avec deux renforts discontinus situés sur un cercle C1 de rayon R1 inférieur au rayon R, ledit cercle étant immédiatement adjacent au cercle C, ce pneumatique étant **caractérisé en ce que** les longueurs de couplage L11 et L12, L11 étant prise supérieure à L12, vérifient la relation suivante :

$$1.5 \leq K \leq 4$$

avec :

$$K = \frac{\left(1 - \dfrac{L12}{L0}\right)}{\left(1 - \dfrac{L11}{L0}\right)}$$

2.  Pneumatique selon la revendication 1 **caractérisé en ce que** :

     (a) chaque renfort (920) discontinu de longueur L0 situé sur un cercle C de rayon R est couplé mécaniquement sur des longueurs de couplage L11 et L12 avec deux renforts discontinus (921) situés sur un cercle C1 de rayon R1, cercle immédiatement adjacent au cercle C, la longueur de couplage L11 étant comprise entre 55 à 75% de L0 et la longueur de couplage L12 étant comprise entre 10 à 30% de L0;
     (b) chaque renfort (920) discontinu du même cercle C de rayon R est couplé mécaniquement sur des longueurs de couplage L21 et L22 avec deux renforts discontinus (922) situés sur un cercle C2 de rayon R2 immédiatement adjacent au cercle C1, la longueur de couplage L21 étant comprise entre 20 à 40% de L0 et la longueur de couplage L22 étant comprise entre 45 à 65% de L0.

3.  Pneumatique selon la revendication 1 ou la revendication 2 **caractérisé en ce que** les renforts discontinus (920, 921, 922) ont une longueur moyenne comprise entre 1/3 et 1/12 de la longueur circonférentielle de la tringle (4) prise aux points de ladite tringle radialement les plus à l'intérieur.

4.  Pneumatique selon l'une quelconque des revendications 1 à 3 **caractérisé en ce que** l'armature complémentaire de renforcement (9) comprend au moins deux nappes (91, 92), l'une desdites nappes étant placée axialement à l'intérieur de la carcasse (3) et contre ladite carcasse.

5.  Pneumatique selon la revendication 4 **caractérisé en ce qu'**au moins une autre nappe de l'armature complémentaire de renforcement (9) est située axialement à l'intérieur ou à l'extérieur du retournement (6) de la carcasse et contre celui-ci.

6.  Pneumatique selon l'une des revendications 1 à 5 **caractérisé en ce que** les extrémités (91e, 92e) radialement à l'extérieur de l'armature supplémentaire de renforcement (9) sont situées radialement au dessous d'une droite J2 passant par le centre J du profil du crochet (23) de jante et faisant un angle $\alpha$ ouvert axialement vers l'intérieur et radialement vers l'extérieur au plus égal à 90°.

7.  Pneumatique selon l'une des revendications 1 à 5 **caractérisé en ce qu'**au moins une armature complémentaire de renforcement (9) comprend des renforts discontinus bi-module, c'est-à-dire dont la courbe force allongement présente deux pentes distinctes, la pente à l'origine et aux petits allongements étant inférieure à la pente aux grands allongements.

8.  Pneumatique selon la revendication 7 **caractérisé en ce que** les renforts discontinus bi-module s'étendent au plus dans un secteur angulaire d'angle au plus égal à 90° et **en ce que** l'armature complémentaire de renforcement (9) comprend en outre des renforts discontinus mono-module s'étendant au plus dans un secteur angulaire d'angle au plus égal à 75°, lesdits secteurs ayant leur sommet au centre du profil externe du crochet de jante, ces angles étant mesurés entre une droite parallèle à l'axe de rotation et passant par ledit centre lorsque le pneumatique est monté sur sa jante, et une droite passant par le même point.

9.  Pneumatique selon la revendication 8 **caractérisé en ce qu'**il est destiné à être monté sur une jante dont les sièges sont prolongés par des rebords eux mêmes terminés par des crochets et **en ce que** les renforts discontinus bi-module s'étendent au plus dans un secteur angulaire d'angle au plus égal à 80° et **en ce que** les renforts discontinus mono-module s'étendent au plus dans un secteur angulaire d'angle au plus égal à 45°.

## Claims

1. A tyre for vehicles carrying heavy loads, comprising a crown zone extended axially and radially by sidewalls (8), these in turn being extended by beads (1) designed to come in contact with a mounting rim (2) of the tyre, the said rim comprising a part that forms a rim seat (21) comprising radially on the outside a rim hook (23) with a substantially circular cross-section, the sidewalls (8) of the tyre being reinforced by a radial carcass reinforcement (3), the said radial carcass reinforcement (3) extending into the beads (1) of the tyre and being anchored therein to a circumferential bead reinforcement (4), the said tyre comprising besides, in at least one bead, an additional reinforcement (9) composed of a plurality of discontinuous reinforcing elements (920, 921, 922) of length L0, these discontinuous reinforcing elements being orientated essentially circumferentially along a plurality of circles C, C1, C2 concentric on the rotation axis of the tyre mounted on its rim, each circle being defined by a mean radius (R, R1, R2) measured relative to the said rotation axis, each discontinuous reinforcing element of length L0 located on a circle C of radius R being mechanically coupled over coupling lengths L11 and L12 respectively with two discontinuous reinforcing elements located on a circle C1 of radius R1 smaller than the radius R, the said circle being immediately adjacent to the circle C, the tyre being **characterised in that** the coupling lengths L11 and L12, L11 being taken as larger than L12, satisfy the following relationship:

$$1.5 \leq K \leq 4$$

where :

$$K = \frac{\left(1 - \dfrac{L12}{L0}\right)}{\left(1 - \dfrac{L11}{L0}\right)}$$

2. The tyre according to Claim 1, **wherein:**

   (a) each discontinuous reinforcing element (920) of length L0 located on a circle C of radius R is mechanically coupled over coupling lengths L11 and L12 with two discontinuous reinforcing elements (921) located on a circle C1 of radius R1, this circle being immediately adjacent to the circle C, the coupling length L11 being between 55 and 75% of L0 and the coupling length L12 being between 10 and 30% of L0;
   (b) each discontinuous reinforcing element (920) on the same circle C of radius R is mechanically coupled over coupling lengths L21 and L22 with two discontinuous reinforcing elements (922) located on a circle C2 of radius R2 immediately adjacent to the circle C1, the coupling length L21 being between 20 and 40% of L0 and the coupling length L22 being between 45 and 65% of L0.

3. The tyre according to Claim 1 or Claim 2, **wherein** the discontinuous reinforcing elements (920, 921, 922) have an average length between 1/3 and 1/12 of the circumferential length of the bead wire (4) measured along the radially innermost points of the said bead wire.

4. The tyre according to any of Claims 1 to 3, **wherein** the additional reinforcement (9) comprises at least two plies (91, 92), one of these plies being positioned axially inside the carcass (3) and against the said carcass.

5. The tyre according to Claim 4, **wherein** at least one other ply of the additional reinforcement (9) is located axially inside or outside the upturn (6) of the carcass and against it.

6. The tyre according to any of Claims 1 to 5, **wherein** the ends (91e, 92e) radially outside the additional reinforcement (9) are located radially below a line J2 passing through the centre J of the cross-section of the rim hook (23) and making an angle α, open axially inwards and radially outwards, equal to at most 90°.

7. The tyre according to any of Claims 1 to 5, **wherein** at least one additional reinforcement (9) comprises discontinuous reinforcing elements which are bimodular, i.e. whose force-elongation curve has two distinct slopes, the slope at the origin and at small elongations being less steep than the slope at large elongations.

8. The tyre according to Claim 7, **wherein** the bi-modular discontinuous reinforcing elements extend at most within an angular sector of angle at most equal to 90°, and the additional reinforcement (9) also comprises mom-modular discontinuous reinforcements that extend at most within an angular sector at most equal to 75°, the said sectors having their top at the centre of the external profile of the rim hook, these angles being measured between a line parallel to the rotation axis and passing through the said centre J when the tyre is mounted on its rim, and a line passing through the same point.

9. The tyre according to Claim 8, **wherein** it is designed for mounting on a rim whose seats are extended by flanges themselves ending in hooks, and the bi-modular reinforcing elements extend at most within an angular sector of angle at most equal to 80°, while the mono-modular discontinuous reinforcing elements extend at most within an angular sector of angle at most equal to 45°.


**Patentansprüche**

1. Luftreifen für Schwerlastfahrzeuge, der eine Scheitelzone enthält, die axial und radial von Flanken (8) verlängert wird, wobei letztere selbst von Wülsten (1) verlängert werden, die dazu bestimmt sind, mit einer Montagefelge (2) des Luftreifens in Kontakt zu kommen, wobei diese Felge einen einen Felgensitz (21) bildenden Bereich enthält, der radial außen eine Nutpartie (23) von im Wesentlichen kreisförmigem Profil aufweist, wobei die Flanken (8) des Luftreifens von einer radialen Karkassenbewehrung (3) verstärkt werden, wobei diese radiale Karkassenbewehrung (3) sich in den Wülsten (1) des Luftreifens verlängert, um auf einer Wulst-Umfangsverstärkungsbewehrung (4) verankert zu werden, wobei dieser Luftreifen außerdem in mindestens einem Wulst eine zusätzliche Verstärkungsbewehrung (9) enthält, die aus mehreren nicht zusammenhängenden Verstärkungen (920, 921, 922) der Länge L0 besteht, wobei diese nicht zusammenhängenden Verstärkungen im Wesentlichen in Umfangsrichtung gemäß mehreren Kreisen C, C1, C2 konzentrisch zur Drehachse des auf seine Felge montierten Luftreifens ausgerichtet sind, wobei jeder Kreis durch einen mittleren Radius (R, R1, R2), gemessen bezüglich der Drehachse, definiert ist, wobei jede nicht zusammenhängende Verstärkung der Länge L0, die sich auf einem Kreis C mit einem Radius R befindet, mechanisch über Kopplungslängen L11 bzw. L12 mit zwei nicht zusammenhängenden Verstärkungen gekoppelt ist, die sich auf einem Kreis C1 mit einem Radius R1 kleiner als der Radius R befinden, wobei dieser Kreis dem Kreis C direkt benachbart ist, wobei dieser Luftreifen **dadurch gekennzeichnet ist, dass** die Kopplungslängen L11 und L12, wobei L11 größer als L12 genommen wird, die folgende Beziehung erfüllen:

$$1{,}5 \leq K \leq 4$$

mit:

$$K = \frac{\left(1 - \dfrac{L12}{L0}\right)}{\left(1 - \dfrac{L11}{L0}\right)}$$

2. Luftreifen nach Anspruch 1, **dadurch gekennzeichnet, dass**

    (a) jede nicht zusammenhängende Verstärkung (920) der Länge L0, die sich auf einem Kreis C mit dem Radius R befindet, mechanisch über Kopplungslängen L11 und L12 mit zwei nicht zusammenhängenden Verstärkungen (921) gekoppelt ist, die sich auf einem Kreis C1 mit dem Radius R1 befinden, welcher Kreis dem Kreis C direkt benachbart ist, wobei die Kopplungslänge L11 zwischen 55 und 75% von L0 liegt und die Kopplungslänge L12 zwischen 10 und 30% von L0 liegt;
    (b) jede nicht zusammenhängende Verstärkung (920) des gleichen Kreises C mit dem Radius R mechanisch über Kopplungslängen L21 und L22 mit zwei nicht zusammenhängenden Verstärkungen (922) gekoppelt ist, die sich auf einem Kreis C2 mit einem Radius R2 befinden, der dem Kreis C1 direkt benachbart ist, wobei die Kopplungslänge L21 zwischen 20 und 40% von L0 und die Kopplungslänge L22 zwischen 45 und 65% von L0 liegt.

3. Luftreifen nach Anspruch 1 oder Anspruch 2, **dadurch gekennzeichnet, dass** die nicht zusammenhängenden Verstärkungen (920, 921, 922) eine mittlere Länge haben, die zwischen 1/3 und 1/12 der Umfangslänge des Wulstkerns (4) liegt, gemessen an den radial am weitesten innen liegenden Punkten des Wulstkerns.

4. Luftreifen nach einem der Ansprüche 1 bis 3, **dadurch gekennzeichnet, dass** die zusätzliche Verstärkungsbewehrung (9) mindestens zwei Lagen (91, 92) enthält, wobei eine der Lagen axial innerhalb der Karkasse (3) und gegen die Karkasse angeordnet ist.

5. Luftreifen nach Anspruch 4, **dadurch gekennzeichnet, dass** mindestens eine andere Lage der zusätzlichen Verstärkungsbewehrung (9) sich axial innerhalb oder außerhalb des Umschlags (6) der Karkasse und gegen diesen befindet.

6. Luftreifen nach einem der Ansprüche 1 bis 5, **dadurch gekennzeichnet, dass** die radial äußeren Enden (91e, 92e) der zusätzlichen Verstärkungsbewehrung (9) sich radial unter einer Geraden J2 befinden, die durch die Mitte J des Profils der Nutpartie (23) geht und einen axial nach innen und radial nach außen offenen Winkel $\alpha$ höchstens gleich 90° bildet.

7. Luftreifen nach einem der Ansprüche 1 bis 5, **dadurch gekennzeichnet, dass** mindestens eine zusätzliche Verstärkungsbewehrung (9) nicht zusammenhängende Bimodul-Verstärkungen enthält, d.h. deren Kraft-Dehnungs-Kurve zwei unterschiedliche Steigungen hat, wobei die Steigung am Anfang und bei den kleinen Dehnungen geringer als die Steigung bei den großen Dehnungen ist.

8. Luftreifen nach Anspruch 7, **dadurch gekennzeichnet, dass** die nicht zusammenhängenden Bimodul-Verstärkungen sich höchstens in einem Winkelsektor mit einem Winkel höchstens gleich 90° erstrecken, und dass die komplementäre Verstärkungsbewehrung (9) außerdem nicht zusammenhängende Monomodul-Verstärkungen enthält, die sich höchstens in einem Winkelsektor mit einem Winkel höchstens gleich 75° erstrecken, wobei der Scheitel der Sektoren sich in der Mitte des äußeren Profils der Nutpartie befindet, wobei diese Winkel zwischen einer Geraden, die parallel zur Drehachse ist und durch die Mitte verläuft, wenn der Luftreifen auf seine Felge montiert ist, und einer Geraden gemessen werden, die durch den gleichen Punkt verläuft.

9. Luftreifen nach Anspruch 8, **dadurch gekennzeichnet, dass** er dazu bestimmt ist, auf eine Felge montiert zu werden, deren Sitze von Felgenhörnern verlängert werden, die selbst in Nutpartien enden, und dass die nicht zusammenhängenden Bimodul-Verstärkungen sich höchstens in einem Winkelsektor mit einem Winkel höchstens gleich 80° erstrecken, und dass die nicht zusammenhängenden Monomodul-Verstärkungen sich höchstens in einem Winkelsektor mit einem Winkel höchstens gleich 45° erstrecken.

**FIG. 1**

EP 1 523 419 B1

FIG. 2

13

FIG. 3

EP 1 523 419 B1

FIG. 4

FIG. 5

15

FIG. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5529104 A